# EUROPÄISCHE PATENTSCHRIFT

(11) **EP 0 433 553 B1**
(45) Veröffentlichungstag und Bekanntmachung des Hinweises auf die Patenterteilung: **05.01.1994**
(21) Anmeldenummer: 90116123.2
(22) Anmeldetag: 23.08.1990
(51) Int. Cl.: B29C 47/92, G01B 11/10

(54) **Vorrichtung zur Messung der Exzentrizität einer einen Leiter umgebenden Ummantelung aus Kunststoffmaterial**
Apparatus for measuring the eccentricity of a plastic coating surrounding a conductor
Dispositif pour mesurer l'excentricité d'un revêtement en matière plastique entourant un conducteur

(30) Priorität: 21.12.1989 DE 3942214
(43) Veröffentlichungstag der Anmeldung: 26.06.1991
(73) Patentinhaber: SIKORA INDUSTRIEELEKTRONIK GMBH, D-28307 Bremen (DE)
(72) Erfinder: Sikora, Harald, D-2800 Bremen 44 (DE)
(74) Vertreter: Patentanwälte Hauck, Graalfs, Wehnert, Döring, Siemons

(56) Entgegenhaltungen:
- GB-A- 2 160 654
- US-A- 4 086 044

## Beschreibung

Die Erfindung bezieht sich auf eine Vorrichtung zur Messung der Exzentrizität einer einen Leiter umgebenden Ummantelung aus Kunststoffmaterial, die von einem Extruder auf den Leiter aufgebracht und in einem an den Extruder angeschlossenen Druckrohr vernetzt wird nach dem Oberbegriff des Patentanspruchs 1.

Üblicherweise wird zum Beispiel bei Kabeln der Leiter in einem Extruder mit einem Kunststoffmantel versehen, der anschließend in ein rohrartiges Gehäuse eingeführt wird, wo eine Trockenvernetzung bzw. Vulkanisierung stattfindet. Derartige Vorrichtungen sind etwa aus der DE-OS 28 26 857 oder der EP 0 099 993 bekanntgeworden.

Die Dicke der Ummantelung muß einen bestimmten Wert haben, um zum Beispiel die notwendige Isoliereigenschaft zu verwirklichen. Es ist daher bekannt, am rohrartigen Vernetzungsgehäuse eine optische Prüfvorrichtung anzubringen, die den Durchmesser mißt. Dies geschieht zum Beispiel mit Hilfe eines Querrohrs, in dem ein Schauglas aus einer geeigneten Glaszusammensetzung angebracht ist, über das zum Beispiel mit Hilfe eines optischen Meßgerätes der Durchmesser des Stranges im Gehäuse gemessen werden kann. Im Rohrgehäuse wird eine Lichtquelle angeordnet, vorzugsweise eine Infrarotquelle, die eine ausreichende Hintergrundhelligkeit erzeugt, damit mit Hilfe von Diodenzeilen oder dergleichen eine relativ genaue Durchmesserprüfung vorgenommen werden kann. Eine derartige Vorrichtung ist ebenfalls aus der bereits genannten EP 0 099 993 bekanntgeworden. Hat der gemessene Durchmesser nicht den gewünschten Wert, wird die Drehzahl der Extruderschnecke oder die Abzugsgeschwindigkeit des Stranges so lange verstellt, bis der Sollwert erreicht ist.

Naturgemäß soll zwar der gewünschte Mindestdurchmesser erreicht, andererseits soll auch kein großerer Durchmesser extrudiert werden (was z.B. bei Kabeln elektrisch keinen Nachteil bringt),weil dies den Aufwand an Material unnötig erhöht. Darüber hinaus kommt es zu Exzentrizitäten, die bei der Durchmessermessung naturgemäß nicht ermittelt werden können. Wenn die optische Anzeigevorrichtung einen gewünschten Durchmesserwert anzeigt, muß dies nicht besagen, daß der Leiter konzentrisch in der Ummantelung verläuft. Weist er eine Exzentrizität auf, erfüllt das Kabel naturgemäß nicht die geforderten Isolationseigenschaften, da die Dicke der Ummantelung partiell den gewünschten Wert unterschreitet.

Aus den obigen Gründen ist die Kenntnis über die Lage des Leiters in der Ummantelung beim Extrudieren eine weitere wichtige Information.Wird am Ende außerhalb der Vernetzungsstrecke gemessen, kommt die Korrektur durch entsprechende Verstellung der Extruderwerkzeuge verhältnismäßig spät; eine größere Kabellänge ist dann unter Umständen mit einer nicht zulässigen Exzentrizität behaftet.

Aus der US-PS 4 086 044, auf der sich der Oberbegriff des Anspruchs 1 stützt, ist bekanntgeworden, die Exzentrizität mit Hilfe einer Induktionsmessung zu ermitteln. Mit Hilfe von induktiven Sensoren wird die Lage des Leiters relativ zu den Sensoren ermittelt, während mit Hilfe optischer Anordnungen die Lage des Kabelmantels bestimmt wird. Dadurch läßt sich auch die Wanddicke der Ummantelung messen bzw. errechnen. Die Messung der Exzentrizität mit Hilfe von Spulen aufweisenden induktiven Sensoren ist jedoch im Druckrohr für die Vernetzung kaum durchführbar. Insbesondere ist eine aufwendige Temperaturkompensation notwendig, um annähernd genaue Werte zu erhalten.

Ein ähnliches Problem stellt sich bei der Herstellung von Kunststoffrohren, bei der man bestrebt ist, über den Umfang eine konstante Dicke der Wandung zu erreichen und Unrundheiten zu vermeiden.

Der Erfindung liegt die Aufgabe zugrunde, eine Vorrichtung zur Messung der Exzentrizität eines Strangs aus Kunststoffmaterial zu schaffen, die eine rasche, die Exzentrizität beseitigende Anpassung des Extruders erlaubt.

Diese Aufgabe wird erfindungsgemäß gelöst durch die Merkmale des Kennzeichnungsteils des Patentanspruchs 1.

Die erfindungsgemäße Vorrichtung sieht zwei optische Aufnahmevorrichtungen vor, die in einem Umfangsabstand von 90° in fester Lagebeziehung zur Führung für den Strang angeordnet sind. Sie nehmen den Schatten auf, der von einer auf der gegenüberliegenden Seite der Ummantelung liegenden Lichtquelle von der Ummantelung erzeugt wird. Auf diese Weise läßt sich nicht nur eine Durchmesserbestimmung vornehmen, sondern auch die relative Lage des Schattens feststellen. Die Lage des Schattens ist im Hinblick auf eine Sollage ein Maß für die Ex- oder Konzentrizität des Stranges. Bei der Rohrherstellung wird die Führung von dem stangenförmigen Kern gebildet, der über die Extrudermündung übersteht. Damit liegt auch die Innenabmessung des Rohres fest. Die Schattenlage läßt somit eine mögliche Abweichung demgegenüber feststellen. Bei der Ummantelung eines Leiters wird dieser von einer Führung im Spritzkopf des Extruders zentriert geführt. Im Hinblick auf den Leiter ist gemäß einem weiteren Merkmal der Erfindung eine Vorrichtung vorgesehen, die dafür sorgt, daß der Extruder zum Druckrohr genau und reproduzierbar ausgerichtet ist. Die Lage des Leiters am Meßort darf also mit ausreichender Genauigkeit als bekannt vorausgesetzt werden. Die exakte Lage des Leiters am Meßort kann auch dadurch festgestellt werden, daß ein Leiter ohne Ummantelung oder mit dünnwandiger Ummantelung gemessen wird. Die dünnwandige Ummantelung würde bei vorhandener Exzentrizität kaum als Fehler eingehen. Ferner sorgen mehrere Bedingungen dafür, daß die Ummantelung im Druckrohr eine vorgegebene Lage aufweist. Hierzu gehört zum einen die Ausrichtung des Extruders zum Druckrohr und zum anderen eine im Spritzkopf vorhandene zentrierende Führung des Leiters und eine im Druckrohr normalerweise vorhandene Führung des ummantelten Leiters, so daß dieser in der Rohrmitte verläuft. Außerdem wird üblicherweise im Druckrohr eine sogenannte Durchhangmessung vorgenommen (eine Durchhangmessung ist nur bei sogenannten Kettenlinien, also bei Druckrohren mit einer Neigung, erforderlich; bei vertikalen Druckrohren ist sie selbstverständlich überflüssig). Mit Hilfe der Durchhangmessung läßt sich die vertikale Lage des Leiters bestimmen und auf Rohrmitte regeln. Wenn daher die Lage des Leiters zu Beginn des Druckrohres durch die genannten Umstände festliegt, ist naturgemäß die Lage des Schattens, den eine Lichtquelle erzeugt und der in der optischen Aufnahmevorrichtung abgebildet ist, ein Maß für die Konzentrizität der Ummantelung.

Die erfindungsgemäße Meßvorrichtung ist außerordentlich einfach aufgebaut und montierbar und gegenüber den rauhen Einflüssen im Betrieb resistent. Es sind lediglich zwei an sich bekannte optische Anordnungen am Druckrohr anzubringen, wie sie bereits aus der Durchmesserprüfung bekannt sind. Zusätzlich ist eine Vorrichtung zur Ausrichtung des Extruders zum Druckrohr vorzusehen. Die hierfür einzusetzenden konstruktiven Maßnahmen sind indessen minimal.

Die erfindungsgemäße Vorrichtung hat den Vorteil, daß eine Exzentrizität relativ schnell, d.h. sehr nahe am Extruder gemessen wird, daher auch sehr rasch eine Verstellung der Extruderwerkzeuge vorgenommen werden kann, um die Exzentrizität zu beseitigen. Nach einer Ausgestaltung der Erfindung ist vorgesehen, daß ein im Zuge des Druckrohrs einsetzbarer Block vorgesehen ist, in den die Lichtquellen montierbar sind und der zwei Schauglasarmaturen hält,deren Achsen um 90° versetzt liegen. Die Druckrohrabschnitte werden an gegenüberliegenden Enden eines derartigen Blocks dichtend angeflanscht, und im Block sind Bohrungen für den Lichtdurchtritt angeordnet, in deren Bereich die Schauglasarmaturen in Form von geeigneten Rohrstutzen angebracht sind. Die erfindungsgemäße Vorrichtung läßt sich auch noch nachträglich in ein bereits installiertes Druckrohr ohne weiteres einbauen.

Die optischen Aufnahmevorrichtungen, beispielsweise geeignete, Diodenzeilen enthaltende Kameras, werden nach einer Ausgestaltung der Erfindung über einen Arm mit dem Block bzw. der Schauglasarmatur starr verbunden. Der Block ist daher so ausgeführt, daß eine sichere und präzise Anbringung der Aufnahmevorrichtungen möglich ist.

Nach einer weiteren Ausgestaltung der Erfindung sind die Lichtquellen von länglichen Glühstreifen gebildet, die an einem die Anschlußklemmen aufweisenden Trägerbauteil angebracht sein können. Trägerbauteil und Glühstreifen können als Einheit in eine dafür vorgesehene Ausnehmung des Blocks eingesetzt werden. Brennt der Glühstreifen zum Beispiel nach längerem Betrieb durch, kann er auf einfache Weise entfernt und durch einen anderen ersetzt werden.

Die Erfindung wird nachfolgend anhand von Zeichnungen näher erläutert.
- Fig. 1: zeigt schematisch einen Extruder mit einem Druckrohr zur Vernetzung mit einer Vorrichtung nach der Erfindung.
- Fig. 2: zeigt schematisch einen Schnitt durch die Vorrichtung nach Fig. 1 entlang der Linie 2-2, jedoch in verdrehter Lage.
- Fig. 3: zeigt eine ähnliche Darstellung wie Fig. 2 in konstruktiv detaillierterer Ausführung.
- Fig. 4: zeigt eine Draufsicht auf die Darstellung nach Fig. 3.
- Fig. 5: zeigt eine Lichtquelle für die erfindungsgemäße Vorrichtung.

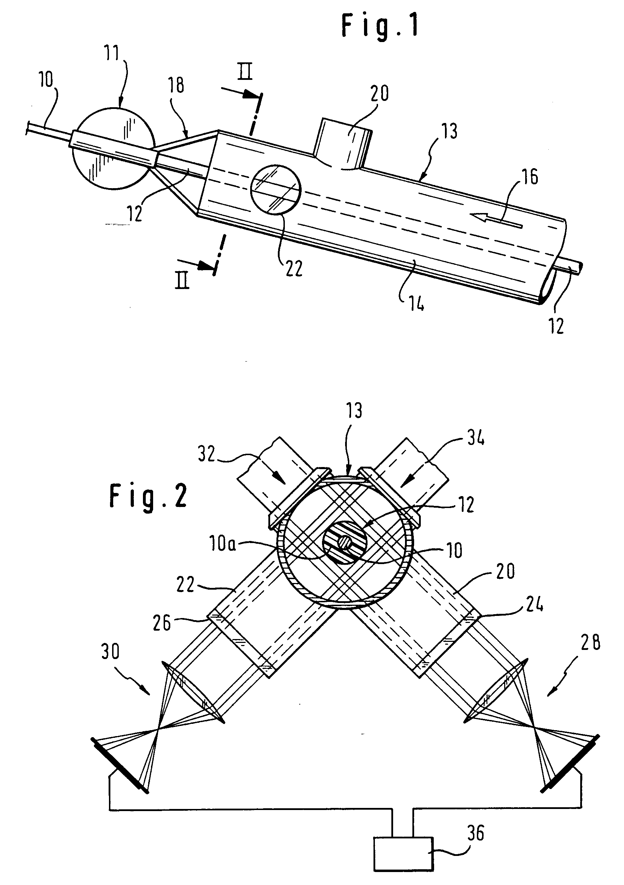

Ein elektrischer Leiter 10 wird in Fig. 1 in einem Extruder 11 mit einem Kunststoffmantel beschichtet zur Bildung eines Kabels. Der ummantelte Strang 12 wird in ein Rohrgehäuse 13 eingeleitet, in dem eine Vernetzung in bekannter Weise stattfindet. Schutzgas, beispielsweise Stickstoff oder Wasserdampf, wird über einen geeigneten, nicht gezeigten Anschluß eingetragen und strömt in Richtung Pfeil 16. Der Extruder 11 ist mit dem Rohrgehäuse 13 über eine mechanische Vorrichtung 18 gekoppelt, durch welche Rohrgehäuse 13 und Extruder 11 genau zueinander ausgerichtet sind. Der Extruder weist im Spritzwerkzeug ferner eine (nicht gezeigte) zentrierte Führung für den Leiter 10 auf. Die im einzelnen nicht dargestellte und beschriebene Vorrichtung 18 ermöglicht ein Wiederausrichten, sollte eine Trennung zwischen den beiden Aggregaten vorgenommen worden sein. Dadurch wird sichergestellt, daß der Strang 12 immer in gleicher Lage und Ausrichtung in das Rohrgehäuse 13 eingeleitet wird. Im Rohrgehäuse 13 befindet sich ferner eine Führung (nicht dargestellt), auf die der Strang 12 im hinteren Ende des Rohrgehäuses aufliegt, wodurch der Strang 12 im Rohrgehäuse 13 in jeweils der gleichen vertikalen Ebene verläuft. Schließlich ist dem Rohrgehäuse 13 eine Durchhangmeßvorrichtung zugeordnet (nicht gezeigt), welche den Durchhang des Strangs 12 im geneigten Rohrgehäuse 13 regelt.

Wie in Fig. 1 angedeutet, sind am Rohrgehäuse 13 zwei Schauglasarmaturen 20, 22 im Umfangsabstand von 90° axial versetzt angeordnet. Die Schauglasarmaturen 20, 22 sind in Fig. 2 schematisch angedeutet. Es handelt sich bei ihnen um Rohrstutzen, die über eine entsprechende Bohrung mit dem Inneren des Rohrgehäuses 13 verbunden sind. Auf den Aufbau der Schauglasarmaturen 20, 22 wird im einzelnen nicht eingegangen, da er an sich bekannt ist. Sie weisen am freien Ende ein Schauglas 24 bzw. 26 auf, so daß mit Hilfe einer optischen Aufnahmevorrichtung 28 bzw. 30 der Strang 12 im Inneren des Rohrgehäuses betrachtet werden kann. Er ist in Fig. 2 im Schnitt gezeigt und weist den bereits erwähnten Leiter 10 auf sowie die Ummantelung 10a, von der der Durchmesser und die Exzentrizität bezüglich des Leiters 10 festgestellt werden soll. Die optischen Aufnahmevorrichtungen 28, 30 sind zum Beispiel Kameras mit sogenannten Diodenzeilen, welche insbesondere für Infrarotlicht empfindlich sind. Auf den den Schauglasarmaturen 20 bzw. 22 gegenüberliegenden Seiten sind Infrarotlichtquellen 32 bzw. 34 angeordnet. Auf die Aufnahmevorrichtungen 28, 30 fällt mithin der von der Ummantelung bzw. dem Strang 12 gebildete Schatten. Dadurch kann nicht nur der Durchmesser des Strangs 12 gemessen werden, sondern auch die Lage des Schattens bezüglich einer Sollage. Wie bereits erwähnt, kann der Leiter 10 im Rohrgehäuse präzise geführt werden bzw. hat eine reproduzierbare Lage aufgrund der genauen Zuordnung von Extruder 11 zu Rohrgehäuse 13 und der Führung innerhalb des Rohrgehäuses 13. Ferner wird der Durchhang des Leiters 10 ermittelt, so daß der Leiter 10 in seiner Lage relativ genau festliegt. Diese Lage kann darüber hinaus zum Beispiel durch den zunächst nicht isolierten oder nur mit einer sehr dünnen Isolierung versehenen Leiter 10 ermittelt werden. Diese Sollage kann in den optischen Aufnahmevorrichtungen 28, 30 gespeichert werden. Weist nun bei einem gegebenen Durchmesser der in den optischen Aufnahmevorrichtungen 28, 30 gemessene Schatten des Strangs 12 in seiner Lage eine Abweichung auf, ist dies ein Anzeichen dafür, daß die Ummantelung 10a nicht konzentrisch auf dem Leiter 10 sitzt. Die Bedienungsperson hat daher die Extruderwerkzeuge so zu verstellen, daß die Exzentrizität beseitigt wird. In Fig. 2 werden die Ausgangssignale der optischen Aufnahmevorrichtungen 28, 30 über Leitungen herausgeführt und auf eine Anzeige und/oder Meßvorrichtung 36 gegeben.

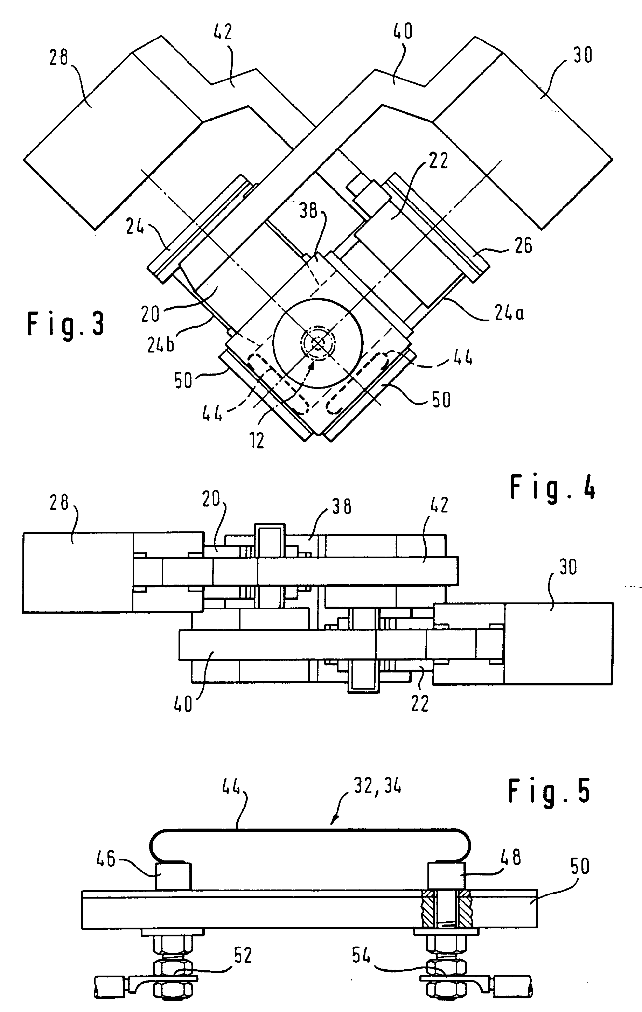

In den Figuren 3 bis 5 ist eine vorteilhafte konstruktive Ausführung der in Fig. 2 dargestellten Vorrichtung wiedergegeben. Zur besseren Vergleichbarkeit sind in den Figuren 3 und 4 die Schauglasarmaturen und die optischen Aufnahmevorrichtungen mit den gleichen Bezugszeichen wie in Fig. 2 versehen. Die Rohrstutzen 24a, 24b der Schauglasarmaturen 20, 22 sind an einem quaderförmigen Block 38 angebracht, der im Bereich der Rohrstutzen 24a, 24b entsprechende Bohrungen aufweist.Außerdem ist er in Achsrichtung durchbohrt für den Durchtritt des strichpunktiert angedeuteten Strangs 12. Die gegenüberliegenden Stirnseiten des Blocks 38 werden in nicht dargestellter Weise dichtend mit Abschnitten des Rohrgehäuses 13 bzw. des Gehäuseabschnitts 14 verbunden. Am Gehäuse 13 sind Z-förmige Arme 40, 42 angebracht, die an den freien Enden die optischen Aufnahmevorrichtungen 28, 30 halten, die naturgemäß mit den Achsen der Rohrstutzen 24a, 24b ausgerichtet sind.

Die Lichtquellen 32, 34 weisen, wie in Fig. 5 dargestellt, einen Glühstreifen 44 auf, der über Kontaktsockel 46, 48 an einem Trägerbauteil 50 angebracht ist, das am anderen Ende Anschlüsse 52, 54 für eine Stromversorgung hält. Die in Fig. 5 gezeigte Einheit wird ebenfalls am Block 38 angebracht, wobei der Glühstreifen 44 über einen entsprechenden Durchbruch in das Innere des Blocks 38 hineinsteht. In Fig. 3 ist der Glühstreifen gestrichelt angedeutet.

Wie ohne weiteres zu erkennen, bildet die in den Figuren dargestellte Meßvorrichtung eine Einheit, die im Zuge eines Rohrgehäuses angeordnet werden, und auch nachträglich in bereits installierte Anlagen eingesetzt werden kann.

## Patentansprüche

1. Vorrichtung zur Messung der Exzentrizität eines Strangs (12) aus Kunststoffmaterial, der aus einem Extruder (11) ausgepreßt wird, wobei im Bereich hinter dem Extruder zwei optische Aufnahmevorrichtungen (28, 30) im Umfangsabstand von 90° angeordnet sind, auf denen ein von jeweils einer auf der gegenüberliegenden Seite der Ummantelung (10a) liegenden Lichtquelle (32, 34) erzeugter Schatten der Ummantelung abgebildet wird und eine Meß- und/oder Anzeigevorrichtung (36) vorgesehen ist, die die Abweichung des Schattens von einer vorgegebenen Lage mißt und/oder anzeigt, dadurch gekennzeichnet, daß der Extruder eine den Strang zentrierende Führung aufweist, und daß die Aufnahmevorrichtungen in fester Lagebeziehung zur Führung angeordnet sind.

2. Vorrichtung nach Anspruch 1, gekennzeichnet durch die Anwendung auf die Ummantelung (10a) eines Leiters (10) in einem Extruder (11).

3. Vorrichtung nach Anspruch 2, dadurch gekennzeichnet,daß die optischen Aufnahmevorrichtungen (28, 30) einem Druckrohr (13) zum Vernetzen der Ummantelung (10a) zugeordnet sind und eine Vorrichtung (18) vorgesehen ist zur reproduzierbaren Ausrichtung der Extruderachse zum Druckrohr (13).

4. Vorrichtung nach Anspruch 1, gekennzeichnet durch die Anwendung auf eine Anlage zur Herstellung eines Kunststoffrohres, bei der die Führung vom über das Mundstück des Extruders überstehenden stangenartigen Kern des Extruders gebildet ist.

5. Vorrichtung nach Anspruch 4, dadurch gekennzeichnet,daß die Aufnahmevorrichtung im achsparallelen Bereich des Kerns angeordnet ist.

6. Vorrichtung nach einem der Ansprüch 1 bis 5, dadurch gekennzeichnet,daß die optischen Aufnahmevorrichtungen (28, 30) in Achsrichtung dicht zusammenliegen.

7. Vorrichtung nach Anspruch 3, dadurch gekennzeichnet,daß ein im Zuge des Druckrohrs (13, 14) einsetzbarer Block (38) vorgesehen ist, in dem die Lichtquellen (32, 34) montierbar sind und der zwei Schauglasarmaturen (20, 22) hält, deren Achsen um 90° versetzt liegen.

8. Vorrichtung nach Anspruch 4, dadurch gekennzeichnet,daß die optischen Aufnahmevorrichtungen (28, 30) über einen Arm (40, 42) mit dem Block (38) bzw. der Schauglasarmatur (20, 22) starr verbunden sind.

9. Vorrichtung nach Anspruch 8, dadurch gekennzeichnet,daß der Arm (40, 42) für eine optische Aufnahmevorrichtung (30, 28) mit der Schauglasarmatur (20, 22) verbunden ist, die der anderen Aufnahmevorrichtung zugeordnet ist.

10. Vorrichtung nach einem der Ansprüche 4 bis 9, dadurch gekennzeichnet, daß die Lichtquelle (32, 34) von einem länglichen Glühstreifen (44) gebildet ist,der an einem mit Anschlußklemmen (52, 54) verbundenen Trägerbauteil (50) anbringbar ist und Trägerbauteil (50) und Glühstreifen (44) als Einheit in eine Ausnehmung des Blocks (38) einsetzbar sind.

## Claims

1. Apparatus for measuring the eccentricity of a rod (12) of plastic material which is extruded from an extruder (11), wherein a pair of optical recording means (28,30) peripherally spaced about 90° is provided in the area downstream of the extruder, on which recording means the image of the shadow of the coating is produced which shadow is created by a pair of light sources (32,34) each being located on remote sides of the coating (10a), and wherein a measuring and/or display means (36) is provided for measuring and/or displaying the deviation of the shadow from a predetermined position, characterized in that the extruder comprises a guide means centering the rod and that the recording means is provided in a fixed positional relation with respect to the guide means.

2. Apparatus of claim 1, characterized by applying the coating (10a) to a conductor (10) in an extruder (11).

3. Apparatus of claim 2, characterized in that the optical recording means (28,30) is associated to a pressure tube (13) for cross-linking the coating (10a) and that means (18) is provided for reproducibly adjusting the extruder axis with respect to the pressure tube (13).

4. Apparatus of claim 1, characterized by applying it to a system for fabricating a plastic tube, in which the guide means is formed by a rod-like core of the extruder projecting beyond the mouth piece of the extruder.

5. Apparatus of claim 4, characterized in that the recording means is provided in the axis-parallel area of the core.

6. Apparatus of one of claims 1 to 5, characterized in that the optical recording means (28,30) are closely mounted in an axial direction.

7. Apparatus of claim 3, characterized in that a block (38) is provided length-ways of the pressure tube (13,14) in which the block the light sources (32,34) can be mounted and which block holds a pair of viewing glass fittings (20, 22) which axes are offset about 90°.

8. Apparatus of claim 4, characterized in that the optical recording means (28,30) are fixedly connected to the block (38) or, respectively, the viewing glass fittings (20,22) through an arm (40,42).

9. Apparatus of claim 8, characterized in that the arm (40,42) for an optical recording means (30,28) is connected to the viewing glass fitting (20,22) which is associated to the other recording means.

10. Apparatus of one of claims 4 to 9, characterized in that the light source (32,34) is defined by an elongate glow strip (44) which can be mounted on a support member (50) which is connected to terminals (52,54), and that the support member (50) and the glow strip (44) defining a module can be received in a recess of the block (38).

## Revendications

1. Dispositif pour mesurer l'excentricité d'un fil (12) en matière plastique formé par une extrudeuse (11), selon lequel, dans la zone située derrière l'extrudeuse, sont disposés deux dispositifs optiques d'enregistrement (28, 30) dont les axes font entre eux un angle de 90°, et sur lesquels est représentée une ombre de la surface extérieure ((10a/du fil), générée par des sources lumineuses (32, 34), situées chacune sur le côté opposé du fil, et un dispositif de mesure et/ou d'affichage (36) est prévu, qui mesure et/ou affiche l'écart de l'ombre par rapport à une position donnée à l'avance,
caractérisé en ce que l'extrudeuse présente un guidage pour centre le fil,
et en ce que des dispositifs d'enregistrement sont disposés dans une position fixe par rapport au guidage.

2. Dispositif selon la revendication 1, caractérisé en ce qu'il est appliqué au revêtement (10a) d'un conducteur (10) dans une extrudeuse.

3. Dispositif selon la revendication 2, caractérisé en ce que les dispositifs optiques d'enregistrement (28, 30) sont montés sur un tube de pression (13) pour réticuler le revêtement (10a), et qu'un dispositif (18) est prévu pour l'alignement reproductible de l'axe de l'extrudeuse par rapport au tube de pression (13).

4. Dispositif selon la revendication 1, caractérisé en ce qu'il est appliqué à une installation de fabrication d'un tube en matière plastique, où le guidage est formé par le noyau de l'extrudeuse, similaire à une barre et dépassant l'orifice de la filière.

5. Dispositif selon la revendication 4, caractérisé en ce que le dispositif d'enregistrement est disposé dans une zone parallèle à l'axe du noyau.

6. Dispositif selon l'une des revendications 1 à 5, caractérisé en ce que les dispositifs optiques d'enregistrement (28, 30) sont disposés proches l'un par rapport à l'autre dans le sens axial.

7. Dispositif selon la revendication 3, caractérisé en ce qu'un bloc (38) est prévu, pouvant être installé sur le chemin du tube de pression (13, 14), à l'intérieur duquel on peut monter les sources lumineuses (32, 34) et qui supporte deux montages pour verres indicateurs (20, 22), dont les axes sont décalés de 90°.

8. Dispositif selon la revendication 4, caractérisé en ce que les dispositifs optiques d'enregistrement (28, 30) sont solidaires avec le bloc (38) ou les montages pour verres indicateurs (20,22) par l'intermédiaire d'un bras (40, 42).

9. Dispositif selon la revendication 8, caractérisé en ce que le bras (40, 42) d'un des dispositifs optiques d'enregistrement (30, 28) est relié au montage pour verres indicateurs (20, 22), affecté à l'autre dispositif d'enregistrement.

10. Dispositif selon l'une des revendications 4 à 9, caractérisé en ce que la source lumineuse (32, 34) est constituée par une bande incandescente longitudinale (44), qui peut être installée sur un ensemble support (50) relié à des bornes de raccordement (52, 54), et que l'ensemble support (50) et la bande incandescente (44) peuvent être insérés, une fois assemblés, dans un creux du bloc (38).
